# EUROPEAN PATENT SPECIFICATION

(11) **EP 3 025 877 B1**
(45) Date of publication and mention of the grant of the patent: **30.05.2018**
(21) Application number: 14829781.5
(22) Date of filing: 24.06.2014
(51) Int. Cl.: B60C 11/12, B60C 11/04, B60C 11/11, B60C 11/13

(54) **PNEUMATIC TIRE**
LUFTREIFEN
PNEUMATIQUE

(30) Priority: 25.07.2013 JP 2013155050
(43) Date of publication of application: 01.06.2016
(73) Proprietor: Bridgestone Corporation, Tokyo 104-8340 (JP)
(72) Inventor: WATABE, Ryoichi, Tokyo 104-8340 (JP)
(74) Representative: Oxley, Robin John George
(86) International application number: PCT/JP2014/066720
(87) International publication number: WO 2015/012049

(56) References cited:
- JP-A- H 071 919
- JP-A- 2002 067 626
- JP-A- 2003 025 811
- JP-A- 2003 025 811
- JP-A- 2003 191 716
- JP-A- 2006 131 021
- JP-A- 2007 022 242
- JP-A- 2007 050 775
- US-A1- 2002 043 318

## Description

### Technical Field

The present invention relates to a pneumatic tire including a land portion on a tread face.

### Background Art

Generally in pneumatic tires, plural grooves are formed to a tread in order to exhibit an edge effect (see, for example, Patent Document 1). The edge effect is increased by forming a large number of the grooves, changing the direction of the grooves to form zigzag shapes, and lengthening the length of the grooves. However, increasing the density of grooves on the land portion of the tread lowers the rigidity of the land portion and results in an inward collapsing, such that it is difficult to effectively obtain gripping force. US 2002/0043318 (A1) discloses a pneumatic tire according to the preamble of claim 1 including sipes extending in zigzag on tread surfaces, wherein both wall surfaces of each sipe, which face to each other, are inclined with respect to a diameter direction of the tire.

### Prior Art Documents

### Related Patent Documents

Patent Document 1 Japanese Patent Application Laid-Open (JP-A) No. 2009-196442

### SUMMARY OF INVENTION

### Technical Problem

In consideration of the above circumstances, an object of the present invention is to provide a pneumatic tire with increased edge effect and improved gripping performance, even when the groove length is the same.

### Solution to Problem

A pneumatic tire according to a first aspect of the present invention is a pneumatic tire according to claim 1.

The pneumatic tire according to the first aspect of the present invention includes the land portion that is partitioned by the plural tire circumferential direction grooves on the tread. The land portion is divided by the plural tire width direction grooves extending along the tire width direction.

Note that "land portion" is a portion of the tread that mainly forms a tread face, and refers at least to ribs or blocks that are partitioned by the tire circumferential direction grooves. The tire width direction grooves encompass lug grooves, these being grooves that do not close up during ground contact, and fine grooves, these being grooves that do close up during ground contact, such as what are referred to as sipes. Moreover, "divided" referred to herein encompasses cases that are not completely divided in plan view, and have a continuous portion, as well as cases that are completely divided in plan view. Furthermore, "extend along the tire width direction" refers to extension directions including a component in the tire width direction, as well as cases extending parallel to the tire width direction.

In the pneumatic tire according to the first aspect, a pair of the block portions is formed by partitioning by the tire width direction grooves, and the protrusion portions that protrude out and the recessed portion that are recessed with respect to the extension direction of the tire width direction grooves in plan view, are respectively formed on the one side and on the other side across the tire width direction grooves. The protrusion portions and the recessed portions include the protrusion portion that protrudes from the block portion on the one side and the recessed portion that faces in the tire circumferential direction this protrusion portion and is recessed into the block portion on the other side, and the recessed portion that is recessed into the block portion on the one side and the protrusion portion that faces in the tire circumferential direction this recessed portion and protrudes from the block portion on the other side. The block height of the protrusion portion is formed higher than the block height of the respective recessed portion positioned across the tire width direction groove.

Note that that protrusion portion is a portion of the land portion that protrudes out from the block portion, and the recessed portion is conversely a portion of the land portion that retreats into the block portion, with respect to the extension direction of the tire width direction grooves. In cases of a wave shape formed by contiguous protrusion portions and recessed portions, the protrusion portions and the recessed portions are divided with a center position of the amplitude of the waved shaped portion as a boundary.

In the above configuration, there is a height difference between the protrusion portion and the recessed portion on each side across the width direction groove, such that an edge of the protrusion portion is relatively higher. This thereby enables the ground contact pressure of the protrusion portion to be increased, and the gripping performance to be improved. Since the edge of the protrusion portion includes components in the tire circumferential direction and in the tire width direction, gripping performance can be improved not only when proceeding straight ahead, but also when turning.

The protrusion portion at a kick-off side of the tire width direction grooves has a higher block height than the protrusion portion at a tread-in side.

The block height of the protrusion portion at the kick-off side of the tire width direction groove is higher than the block height of the protrusion portion at the tread-in side. The ground contact pressure of the protrusion portion at the kick-off side of the tire width direction groove, namely, at an edge portion of the protrusion portion on the tread-in end side of the block portion, is thereby higher, thereby enabling the gripping performance to be further improved on snow in particular, due to a catching effect.

In a pneumatic tire according to a second aspect of the present invention, each block portion has a kick-off side and a tread-in side.

In a pneumatic tire according to the second aspect, a height difference G1 between a peak point of the protrusion portion and a trough point of the recessed portion at the kick-off end side of the block portion may be within a range from 0.1 mm to 1.0 mm. A height difference G2 between a peak point of the protrusion portion and a trough point of the recessed portion at the tread-in end side of the block portion may be within a range from 0.1 mm to 1.0 mm. A height difference G3 between a peak point of the protrusion portion at the kick-off end side of the block portion and a trough point of the recessed portion at the tread-in end side of the block portion is within a range from 0.2 mm to 2.0 mm.

In a pneumatic tire according to the second aspect of the present invention, the protrusion portions at the tread-in end side of the block portion may have a higher block height than the protrusion portions at the kick-off end side of the block portion.

In the pneumatic tire according to a third aspect of the present invention, there is also a difference in height between the height of the protrusion portions disposed on both tire circumferential direction sides, with the protrusion portion at the tread-in end side higher. The edge portion of the protrusion portion at the tread-in end side of the block portion is thereby higher, enabling gripping performance to be further improved.

In a pneumatic tire according to a forth aspect of the present invention, the tire width direction grooves are zigzag shaped with amplitude in the tire circumferential direction.

Configuring the zigzag shaped tire width direction grooves in this manner enables repeatedly alternating protrusion portions and recessed portions to be formed inside a single block portion, and enables the gripping performance to be further improved by the height difference therebetween.

In a pneumatic tire according to a fifth aspect of the present invention, the tire width direction grooves are sipes that close up during ground contact.

In a pneumatic tire according to a sixth aspect of the present invention, steps between block portions disposed on either side of the same tire width direction groove are formed in the tire width direction by the height difference between the protrusion portions and recessed portions on the tread-in side of the tire width direction groove and the protrusion portions and recessed portions on the kick-off side of the tire width direction groove.

In a pneumatic tire according to a seventh aspect of the present invention, in the block portions that are adjacent to each other around the tire circumferential direction, block portions having a higher overall block height and block portions having a lower overall height are disposed alternately to each other.

Making the height of the protrusion portion higher than the height of the recessed portion partitioned by the sipes in this manner enables gripping performance to be effectively improved using the sipes, which are relatively less liable to cause a reduction in the rigidity of the land portion, and which exhibit the edge effect.

### Advantageous Effects of Invention

The present invention has the above configuration, thereby enabling the edge effect to be increased and gripping performance to be improved, even when the groove length of the land portion is the same.

### BRIEF DESCRIPTION OF DRAWINGS

Fig. 1 is an opened out view of a tread, illustrating a surface of a pneumatic tire according to an exemplary embodiment.
Fig. 2 is an enlarged plan view of a block of a pneumatic tire according to the present exemplary embodiment.
Fig. 3 is a perspective view of a block of a pneumatic tire according to the present exemplary embodiment.
Fig. 4A is a cross-section along line A-A in Fig. 2.
Fig. 4B is a cross-section along line B-B in Fig. 2.
Fig. 5A is an opened out view of an edge portion of a small block portion.
Fig. 5B is a plan view of a small block portion.
Fig. 5C is an opened out view of an edge portion of a small block portion.
Fig. 6A is a plan view of small block portions that are adjacent to each other on either side of a sipe.
Fig. 6B is a drawing illustrating the height of edge portions of small block portions that are adjacent to each other on either side of a sipe.
Fig. 7A is a plan view illustrating a block according to a modified example of a pneumatic tire of the present exemplary embodiment.
Fig. 7B is a plan view illustrating a block according to a modified example of a pneumatic tire of the present exemplary embodiment.

### DESCRIPTION OF EMBODIMENTS

Explanation follows regarding a pneumatic tire 10 according to an exemplary embodiment of the present invention, with reference to the drawings. In the present exemplary embodiment, a studless tire that exhibits gripping force on snowy roads is explained as an example of the pneumatic tire 10.

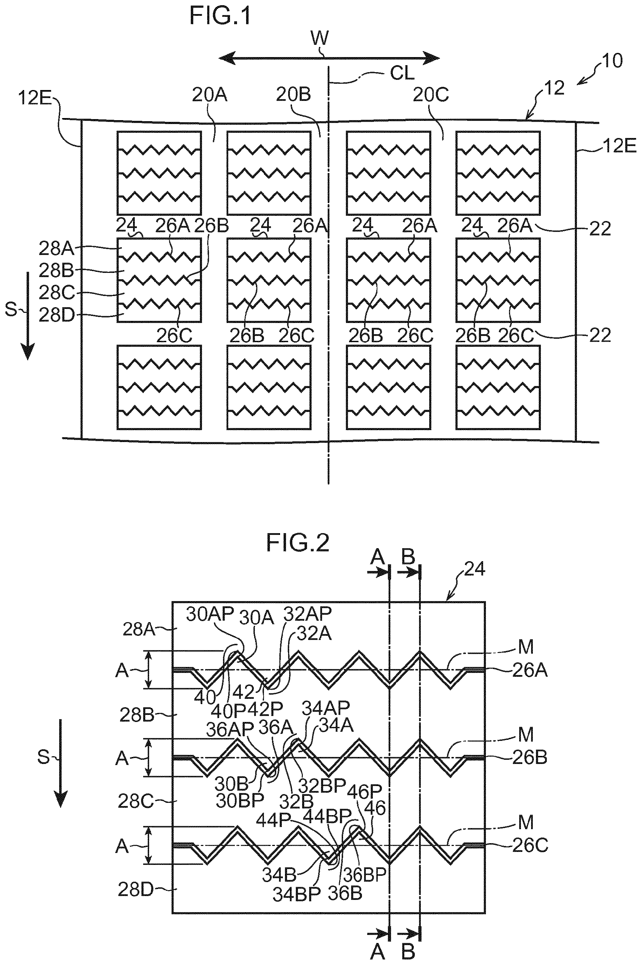

Fig. 1 is an opened-out view of a tread 12 of the pneumatic tire 10. The tread 12 of the pneumatic tire 10 of the present exemplary embodiment is shaped with left-right symmetry about a tire equatorial plane CL (a plane that divides the pneumatic tire 10 in two at the tire width direction center of the tread 12). Note that tire ground contact edges 12E of the tread 12 are the tire ground contact edges when the pneumatic tire 10 is fitted to a standard rim, as defined in the JATMA YEAR BOOK (2012 edition, Japan Automobile Tire Manufacturers Association standards), inflated to an internal pressure of 100% air pressure (maximum air pressure) corresponding to the maximum load capacity (load shown in bold in the internal pressure-load capacity correspondence table) for the applicable JATMAY EAR BOOK size/ply rating, and loaded to the maximum load capacity. In cases in which the location of use or manufacturing location applies TRA standards or ETRTO standards, then the respective standards are adhered to.

The rotation direction of the pneumatic tire 10 is predetermined. In the drawings, the rotation direction is indicated by the arrow S, and the tire width direction that is orthogonal thereto is indicated by the arrow W, respectively. Note that the circumferential direction of the pneumatic tire 10 is the rotation direction and the opposite direction thereto.

The height of a land portion (block) corresponds to the distance from the tire axis, such that the further the distance from the tire axis the higher the height of the block, and the closer the distance from the tire axis the lower the height of the block

Three tire circumferential direction grooves 20A, 20B, 20C running around the tire circumferential direction are formed to the tread 12 of the pneumatic tire 10 of the present exemplary embodiment. The tire circumferential direction groove 20B is formed on the tire equatorial plane CL. The tire circumferential direction grooves 20A, 20C are formed in symmetrical positions on either side of the tire circumferential direction groove 20B. Lug grooves 22 running along the tire width direction are also formed to the tread 12. Plural lug grooves 22 are formed at specific intervals in the tire circumferential direction.

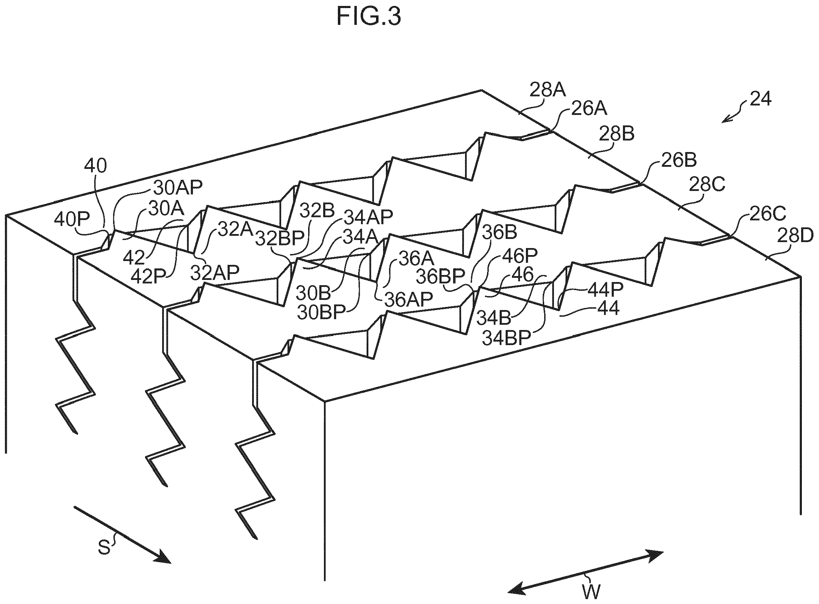

The tread 12 is formed with plural blocks 24 that are partitioned by the tire circumferential direction grooves 20A to 20C and the lug grooves 22. Sipes 26A to 26C extending along the tire width direction are formed to the blocks 24. The sipes 26A to 26C are each formed in a zigzag shape with amplitude in the tire circumferential direction. The region of each block 24 is divided by the sipes 26A to 26C. The sipes 26A to 26C each have a groove width of an amount so as to close up during ground contact, and are formed inside each single block 24 at intervals along the tire circumferential direction. The block 24 is partitioned into four small block portions 28A to 28D by the sipes 26A to 26C. As illustrated in Fig. 3, the sipes 26A to 26C are also formed in zigzag shapes along the tire radial direction, and are what are referred to as three dimensional sipes (3D sipes).

As illustrated in Fig. 2, each small block portion 28B includes protrusion portions 30 that each protrude out from the small block portion 28B with respect to the extension direction of the sipe 26A, namely, which each protrude in the tire circumferential direction when viewed in plan view. The small block portion 28B also includes recessed portions 32 that are each recessed into the small block portion 28B with respect to the extension direction of the sipe 26A, namely, which are each recessed in the tire circumferential direction when viewed in plan view. The protrusion portions 30 and the recessed portions 32 at a tread-in end side of the small block portion 28B respectively configure protrusion portions 30B and recessed portions 32B, and the protrusion portions 30 and the recessed portions 32 at a kick-off end side respectively configure protrusion portions 30A and recessed portions 32A. The protrusion portions 30A, 30B are collectively referred to as the protrusion portions 30, and the recessed portions 32A, 32B are collectively referred to as the recessed portions 32. As illustrated in Fig. 2, supposing that there are lines M that are each in a tire circumferential direction center position with respect to an amplitude A of the sipes 26A, 26B, portions protruding out in the tire circumferential direction from the small block portion 28B further than the lines M configure the protrusion portions 30, and portions entering (retreating to) the small block portion 28B side configure the recessed portions 32. Similar applies to the protrusion portions and recessed portions of the small block portions described below when viewed in plan view. Peak points of the protrusion portions 30A, 30B respectively configure peak points 30AP, 30BP, and bend points of the troughs of the recessed portions 32A, 32B respectively configure trough points 32AP, 32BP.

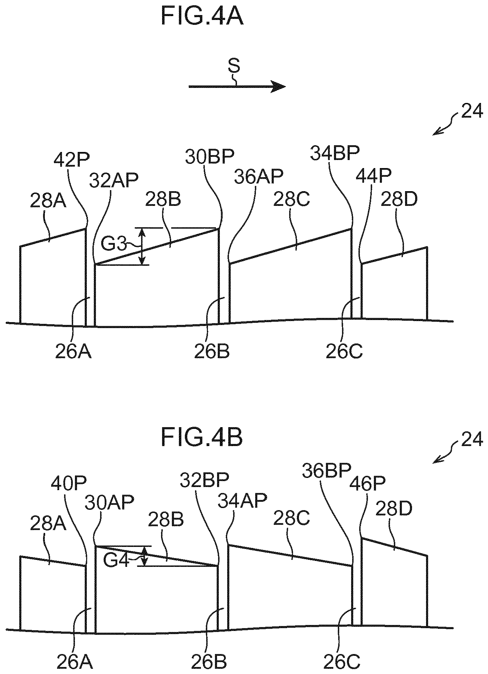

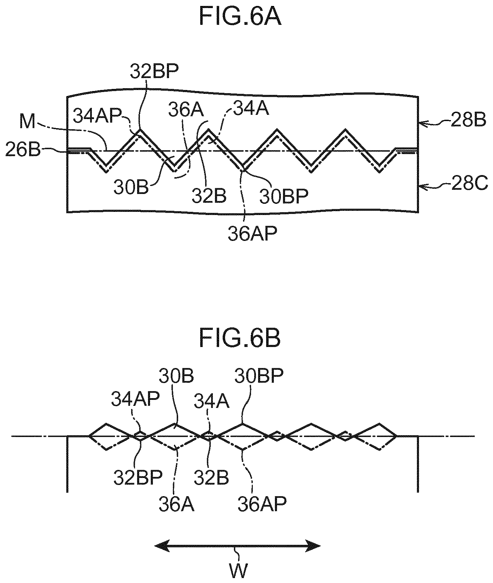

The block height inside the small block portion 28B is not uniform, and has a difference in height in which the height gradually changes. The block height inside the small block portion 28B is highest at the peak points 30BP, and lowest at the trough points 32AP. As illustrated in Fig. 4A, the height slopes from each peak point 30BP across to the trough point 32AP that faces this peak point 30BP in the tire circumferential direction, so as to gradually become lower on progression from the peak point 30BP toward the trough point 32AP. As illustrated in Fig. 4B, the height also slopes from each peak point 30AP across to the trough point 32BP that faces this peak point 30AP in the tire circumferential direction, so as to gradually become lower on progression from the peak point 30AP toward the trough point 32BP. As illustrated in Fig. 6B, the height of peak points 34AP formed along the sipe 26B is lower than that of the peak points 30BP, and the height of the trough points 32AP is lower than the trough points 32BP. The height of the peak points 30AP is higher than the trough points 32BP.

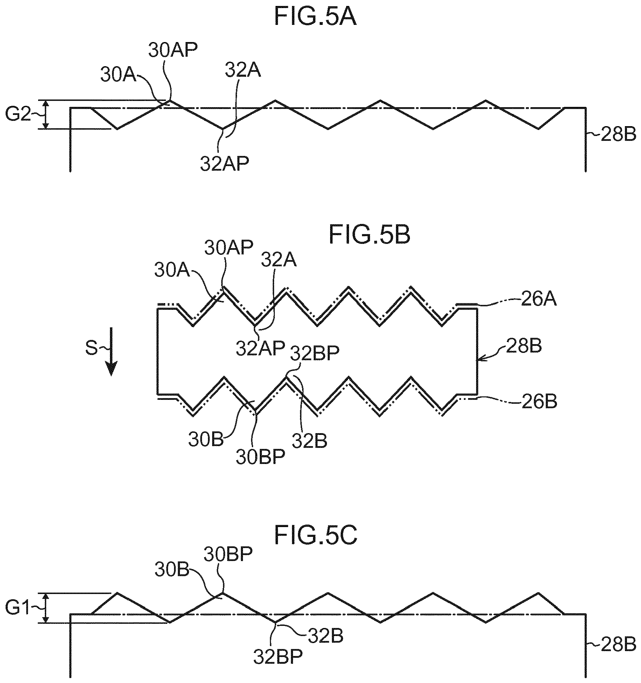

Fig. 5B is a plan view illustrating the small block portion 28B, and Fig. 5A and Fig. 5C are opened out side views illustrating edge portions along the sipes 26A, 26B. As illustrated in Fig. 5A, an edge upper portion of the small block portion 28B along the sipe 26A slopes so as to gradually become lower on progression from the protrusion portions 30A toward the adjacent recessed portions 32A. As illustrated in Fig. 5C, an edge upper portion along the sipe 26B also slopes so as to gradually become lower on progression from the protrusion portions 30B toward the adjacent recessed portions 32B.

A height difference G1 between the peak points 30BP and the trough points 32BP is preferably within a range from 0.1 mm to 1.0 mm, and more preferably within a range from 0.25 mm to 0.5 mm. A height difference G2 between the peak points 30AP and the trough points 32AP is also preferably within a range from 0.1 mm to 1.0 mm, and more preferably within a range from 0.25 mm to 0.5 mm. A height difference G3 between the peak points 30BP and the trough points 32AP (see Fig. 4A) is preferably within a range from 0.2 mm to 2.0 mm, and more preferably within a range from 0.5 mm to 1.0 mm. A height difference G4 between the peak points 30AP and the trough points 32BP (see Fig. 4B) is preferably within a range from 0.5 mm to 0.5 mm.

The small block portion 28B and the small block portion 28C have the same shape as each other. In the small block portion 28C, portions corresponding to the protrusion portions 30A, 30B, the recessed portions 32A, 32B, the peak points 30AP, 30BP, and the trough points 32AP, 32BP of the small block portion 28B respectively configure protrusion portions 34A, 34B, recessed portions 36A, 36B, peak points 34AP, 34BP, and trough points 36AP, 36BP.

The small block portion 28A has substantially the same shape as a portion of the small block portion 28B that is further toward the small block portion 28C side than toward the line M. An edge portion of the small block portion 28A running along the lug groove 22 has a straight line shape. In the small block portion 28A, portions corresponding to the protrusion portions 30B, the recessed portions 32B, the peak points 30BP, and the trough points 32BP of the small block portion 28B respectively configure protrusion portions 42, recessed portions 40, peak points 42P, and trough points 40P.

The small block portion 28D has substantially the same shape as a portion of the small block portion 28B that is further toward the small block portion 28A side than toward the line M. An edge portion of the small block portion 28D running along the lug groove 22 has a straight line shape. In the small block portion 28D, portions corresponding to the protrusion portions 30A, the recessed portions 32A, the peak points 30AP, and the trough points 32AP of the small block portion 28B respectively configure protrusion portions 46, recessed portions 44, peak points 46P, and trough points 44P.

Fig. 6A is a plan view illustrating portions of the small block portions 28B, 28C that are adjacent to each other on either side of the sipe 26B. Fig. 6B is a diagram illustrating the height of edge portions running along the sipe 26B, viewed from the tire circumferential direction. Steps in the tire width direction W are formed by the height difference between the protrusion portions 30B, the recessed portions 32B, the protrusion portions 34A, and the recessed portions 36A on either side of the sipe 26B. Similarly, steps in the tire width direction W are formed between the small block portion 28A and the small block portion 28B disposed on either side of the sipe 26A, by the height difference between the protrusion portions 42, the recessed portions 40, the protrusion portions 30A, and the recessed portions 32A. Furthermore, steps in the tire width direction W are formed between the small block portion 28C and the small block portion 28D disposed on either side of the sipe 26C, by the height difference between the protrusion portions 34B, the recessed portions 36B, the protrusion portions 46, and the recessed portions 44.

In each of the small block portions that are adjacent to each other on either side of the sipes 26A to 26C, the protrusion portions disposed at the kick-off side of the sipe are higher than the protrusion portions disposed at the tread-in side. Note that the protrusion portions disposed at the kick-off side of the sipe are disposed inside a single small block portion at the tread-in end thereof, and the protrusion portions disposed at the tread-in side of the sipe are disposed inside a single small block portion at the kick-off end thereof.

As illustrated in Fig. 4A, the tread-in ends of the small block portions 28A to 28D are higher in a cross-section around the tire circumferential direction of each block 24 along line A-A linking the peak points 42P, the trough points 32AP, the peak points 30BP, the trough points 36AP, the peak points 34BP, and the trough points 44P. As illustrated in Fig. 4B, the kick-off ends of the small block portions 28A to 28D are higher in a cross-section of each block 24 along line D-D linking the trough points 40P, the peak points 30AP, the trough points 32BP, the peak points 34AP, the trough points 36BP, and the peak points 46P.

Explanation follows regarding effects of the pneumatic tire 10 of the present exemplary embodiment.

Each block 24 of the pneumatic tire 10 includes the zigzag shaped sipes 26A to 26C extending along the tire width direction. The protrusion portions are higher than the recessed portions in the protrusion portions 42 and the recessed portions 40, the protrusion portions 30 and the recessed portions 32, the protrusion portions 34 and the recessed portions 36, and the protrusion portions 46 and the recessed portions 44 running along these sipes. The ground contact pressure of the edge portions of the protrusion portions that are relatively high accordingly increases due to the height difference between the protrusion portions and the recessed portions, thereby enabling the gripping performance to be improved.

In the protrusion portions and the recessed portions of the small block portions 28A to 28D respectively disposed on other either side of the sipes 26A to 26C, the protrusion portions at the kick-off side of the sipes are higher than the protrusion portions at the tread-in side. There is accordingly a height difference between the height of the protrusion portions disposed at the tread-in side, and the height of the protrusion portions of the block portions at the kick-off side on either side of the sipes 26A to 26C, with the protrusion portions at the kick-off side being higher. The ground contact pressure of the edge portions of the protrusion portions at the kick-off side on either side of the sipes 26A to 26C is thereby higher, thereby enabling the gripping performance to be further improved. The effect of the edge portions of the protrusion portions at the kick-off side catching enables the gripping performance on snowy roads to be improved.

Note that, as previously described, at the protrusion portions and the recessed portions of the small block portions 28A to 28D that are respectively disposed on either side of the sipes 26A to 26C in the present exemplary embodiment, the protrusion portions at the kick-off side of the sipes are higher than the protrusion portions at the tread-in side.

In the present exemplary embodiment, three dimensional sipes that are zigzag shaped along the tire radial direction have been explained as an example of sipes; however, the sipes are not necessarily three dimensional sipes. Employing three dimensional sipes as in the present exemplary embodiment enables the rigidity of the small block portions 28 to be secured.

In the present exemplary embodiment, sipes have been explained as an example of tire width direction grooves; however, the tire width direction grooves of the present invention may be fine grooves or lug grooves rather than sipes. In the present exemplary embodiment, an example has been explained in which the sipes extend parallel to the tire width direction; however, the sipes may extend at an angle to the tire width direction.

In the present exemplary embodiment, an example has been explained in which the sipes 26 are formed as tire width direction grooves to the blocks; however, the tire width direction grooves of the present invention may be formed to ribs that are continuous land portions around the tire circumferential direction.

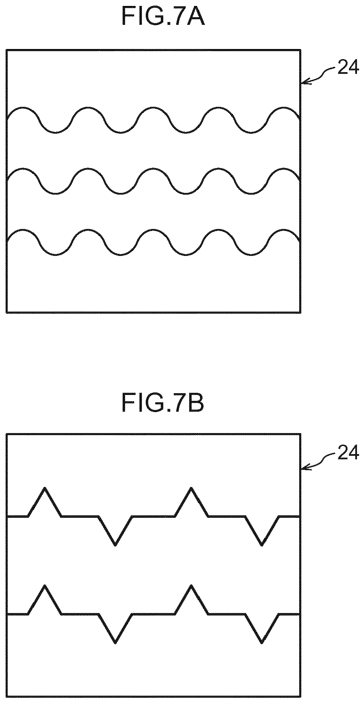

In the present exemplary embodiment, an example has been explained in which the protrusion portions and the recessed portions are formed by the zigzag shaped sipes; however, the protrusion portions and the recessed portions of the present invention are not limited to being formed by zigzag shapes, and other shapes may be employed. For example, as illustrated in Fig. 7A, wave shapes may be employed, or, as illustrated in Fig. 7B, shapes may be employed that include portions parallel to the tire width direction between the protrusion portions and the recessed portions.

In the present exemplary embodiment, an example has been explained in which the protrusion portions and the recessed portions of the small block portions 28B, 28C are different in height at both the tread-in end and the kick-off end sides; however, a configuration not according to the present invention may be applied in which only the protrusion portions and the recessed portions at one side are different in height. In such cases, for example, the end side of each small block portion 28 further toward the block kick-off side than toward the line M may be configured in a flat shape that has entirely the same height.

In the present exemplary embodiment, the heights of corresponding portions of the respective small block portions 28A to 28D are the same height; however, variation may be given to the height of each small block portion for small block portions that are adjacent to each other around the tire circumferential direction. For example, in the small block portions 28 that are adjacent to each other around the tire circumferential direction, high small block portions that have a higher overall block height and low block portions that have a lower overall block height may be disposed alternately to each other. By making such variations, the height difference between adjacent small block portions increases, enabling the ground contact pressure to be further increased.

Note that, in the present exemplary embodiment, a pneumatic tire with a predetermined rotation direction has been explained; however, the present invention may be applied to a pneumatic tire without a prescribed rotation direction.

In the present exemplary embodiment, a pneumatic tire of the present invention has been explained with a studless tire as an example; however, the present invention is not limited to a studless tire, and may also be applied to other pneumatic tires.

### Example

In order to confirm the advantageous effects of the present invention, a pneumatic tire including the tread pattern of the present exemplary embodiment illustrated in Fig. 1 was fitted to a vehicle, and the acceleration and the braking distance were measured. The step between the respective peak points of the protrusion portions and trough points of the recessed portions disposed on either side of the same sipe (hereafter simply referred to as "step"), and the height difference between the respective peak points of the protrusion portions and trough points of the recessed portions adjacent to each other along the same sipe (hereafter simply referred to as "height difference"), were varied, while other conditions were left the same. The tire size, test conditions, and method are given below. The test results are shown in Table 1.

| | | |
|---|---|---|
| Tire size: | 225/45R17 | |
| Rim: | 7.5J | |
| Internal pressure: | 230/230 kPa | |
| Load: | Weight of driver + 60 kg (588N) | |
| Speed: | When measuring acceleration: | 10 km/h → 35 km/h |
| | When measuring braking distance: | 30 km/h → 0 km/h, ABS was ON. |
| | | |
| Test method: | When measuring acceleration: the acceleration was averaged over nine cycles and indexed. In the index, higher values indicate larger gripping force. | |
| | When measuring braking distance: the braking distance was averaged over nine cycles and indexed. In the index, lower values indicate larger gripping force. | |

**Table 1**

| | | | | | | | |
|---|---|---|---|---|---|---|---|
| Step (mm) | 0 | 0.15 | 0.20 | 0.50 | 1.00 | 0.50 | 0.50 |
| Height difference (mm) | 0 | 0 | 0 | 0 | 0 | 0.25 | 0.28 |
| Average acceleration | 2.00 | 2.01 | 2.05 | 2.12 | 2.14 | 2.20 | 2.24 |
| Average braking distance | 10.0 | 10.0 | 9.8 | 9.5 | 9.4 | 9.1 | 9.0 |

As shown in Table 1, it was confirmed that a superior gripping force can be obtained when the step is within a range from 0.15 mm to 1.00 mm, compared to cases in which there is no step. Moreover, it was confirmed that a superior gripping force can be obtained in cases in which there is a height difference but the step is the same.

## Claims

1. A pneumatic tire (10), comprising:
a land portion that is formed at a tread (12) and that is partitioned by a tire circumferential direction groove (20);
a plurality of tire width direction grooves (26) that divide the land portion and that extend along a tire width direction W;
a plurality of block portions (28) that are formed by partitioning by the tire width direction grooves (26); and,
a protrusion portion (30A) that protrudes from each block portion (28B) on one side, a recessed portion (32B) that faces in the tire circumferential direction the protrusion portion (30A) and forms a recess in each block portion (28B) on another side, a recessed portion (32A) that is recessed into the block portion (28B) on the one side, and a protrusion portion (30B) that faces in the tire circumferential direction the recessed portion (32A) and protrudes from the block portion (28B) on the other side with respect to an extension direction of the tire width direction grooves (26) in plan view, such that the protrusion portions (30A, 30B) and the recessed portions (32A, 32B) configure a portion of each of the block portions (28), and are respectively formed at the block portions (28) on the one side and the other side across the tire width direction grooves (26),
wherein a block height of the protrusion portions (30A, 30B) is formed higher than a block height of recessed portions (40, 36A) positioned across the tire width direction grooves (26), **characterized in that** the protrusion portions (30B) of one block portion (28B) at a kick-off side of the tire width direction grooves (26) have a higher block height than protrusion portions (34A) of a circumferentially adjacent block portion (28C) at a tread-in side.

2. The pneumatic tire of claim 1, wherein each block portion (28B) has a kick-off end side and a tread-in end side.

3. The pneumatic tire of claim 2, wherein the protrusion portions (30B, 34B) at the tread-in end side of the block portion have a higher block height than the protrusion portions at the kick-off end side of the block portion.

4. The pneumatic tire (10) of any one of the preceding claims, wherein the tire width direction grooves (26) are zigzag shaped with amplitude in the tire circumferential direction.

5. The pneumatic tire (10) of any one of the preceding claims, wherein the tire width direction grooves (26) are sipes that close during ground contact.

6. The pneumatic tire of any one of claims 2 to 5, wherein a height difference G1 between a peak point (30BP, 34BP) of the protrusion portion and a trough point (32BP, 36BP) of the recessed portion at the kick-off end side of the block portion is within a range from 0.1 mm to 1.0 mm.

7. The pneumatic tire of any one of claims 2 to 6, wherein a height difference G2 between a peak point (30AP, 34AP) of the protrusion portion and a trough point (32AP, 36AP) of the recessed portion at the tread-in end side of the block portion is within a range from 0.1 mm to 1.0 mm.

8. The pneumatic tire of any one of claims 2 to 7, wherein a height difference G3 between a peak point (30BP, 34BP) of the protrusion portion at the kick-off end side of the block portion and a trough point (32AP, 36AP) of the recessed portion at the tread-in end side of the block portion is within a range from 0.2 mm to 2.0 mm.

9. The pneumatic tire of any one of the preceding claims, wherein steps between block portions disposed on either side of the same tire width direction groove (26) are formed in the tire width direction W by the height difference between the protrusion portions (34A) and recessed portions (36A) on the tread-in side of the tire width direction groove (26) and the protrusion portions (30B) and recessed portions (32B) on the kick-off side of the tire width direction groove.

10. The pneumatic tire of any one of the preceding claims, wherein, in the block portions (28) that are adjacent to each other around the tire circumferential direction, block portions having a higher overall block height and block portions having a lower overall height are disposed alternately to each other.

## Patentansprüche

1. Luftreifen (10), der Folgendes umfasst:
einen Stegabschnitt, der an einer Lauffläche (12) geformt ist und der durch eine Reifenumfangsrichtungsrille (20) unterteilt wird,
mehrere Reifenbreitenrichtungsrillen (26), die den Stegabschnitt teilen und die sich entlang einer Reifenbreitenrichtung W erstrecken,
mehrere Blockabschnitte (28), die durch Unterteilen durch die Reifenbreitenrichtungsrillen (26) geformt sind, und
einen Vorsprungsabschnitt (30A), der von jedem Blockabschnitt (28B) auf einer Seite vorspringt, einen ausgesparten Abschnitt (32B), der in der Reifenumfangsrichtung dem Vorsprungsabschnitt (30A) gegenüberliegt und eine Aussparung in jedem Blockabschnitt (28B) auf einer anderen Seite bildet, einen ausgesparten Abschnitt (32A), der in dem Blockabschnitt (28B) auf der einen Seite ausgespart ist, und einen Vorsprungsabschnitt (30B), der in der Reifenumfangsrichtung dem ausgesparten Abschnitt (32A) gegenüberliegt und von dem Blockabschnitt (28B) auf der anderen Seite vorspringt in Bezug auf eine Ausdehnungsrichtung der Reifenbreitenrichtungsrillen (26) in einer Draufsicht, so dass die Vorsprungsabschnitte (30a, 30B) und die ausgesparten Abschnitte (32A, 32B) einen Abschnitt jedes der Blockabschnitte (28) konfigurieren und jeweils an den Blockabschnitten (28) auf der einen Seite beziehungsweise der anderen Seite über die Reifenbreitenrichtungsrillen (26) geformt sind,
wobei eine Blockhöhe der Vorsprungsabschnitte (30A, 30B) höher geformt ist als eine Blockhöhe von ausgesparten Abschnitten (40, 36A), die über die Reifenbreitenrichtungsrillen (26) angeordnet sind, **dadurch gekennzeichnet, dass**
die Vorsprungsabschnitte (30B) eines Blockabschnitts (28B) an einer Anfangsseite der Reifenbreitenrichtungsrillen (26) eine höhere Blockhöhe haben als Vorsprungsabschnitte (34A) eines in Umfangsrichtung benachbarten Blockabschnitts (28C) an einer Laufflächeninnenseite.

2. Luftreifen nach Anspruch 1, wobei jeder Blockabschnitt (28B) eine Anfangsendseite und eine Laufflächeninnenendseite hat.

3. Luftreifen nach Anspruch 2, wobei die Vorsprungsabschnitte (30A, 34B) an der Laufflächeninnenendseite des Blockabschnitts eine höhere Blockhöhe haben als die Vorsprungsabschnitte an der Anfangsendseite des Blockabschnitts.

4. Luftreifen (10) nach einem der vorhergehenden Ansprüche, wobei die Reifenbreitenrichtungsrillen (26) zickzackförmig mit einer Amplitude in der Reifenumfangsrichtung sind.

5. Luftreifen (10) nach einem der vorhergehenden Ansprüche, wobei die Reifenbreitenrichtungsrillen (26) Lamellen sind, die sich während einer Bodenberührung schließen.

6. Luftreifen nach einem der Ansprüche 2 bis 5, wobei ein Höhenunterschied G1 zwischen einem Gipfelpunkt (30BP, 34BP) des Vorsprungsabschnitts und einem Tiefpunkt (32BP, 36BP) des ausgesparten Abschnitts an der Anfangsendseite des Blockabschnitts innerhalb eines Bereichs von 0,1 mm bis 1,0 mm liegt.

7. Luftreifen nach einem der Ansprüche 2 bis 6, wobei ein Höhenunterschied G2 zwischen einem Gipfelpunkt (30AP, 34AP) des Vorsprungsabschnitts und einem Tiefpunkt (32AP, 36AP) des ausgesparten Abschnitts an der Laufflächeninnenendseite des Blockabschnitts innerhalb eines Bereichs von 0,1 mm bis 1,0 mm liegt.

8. Luftreifen nach einem der Ansprüche 2 bis 7, wobei ein Höhenunterschied G3 zwischen einem Gipfelpunkt (30BP, 34BP) des Vorsprungsabschnitts an der Anfangsendseite des Blockabschnitts und einem Tiefpunkt (32AP, 36AP) des ausgesparten Abschnitts an der Laufflächeninnenendseite des Blockabschnitts innerhalb eines Bereichs von 0,2 mm bis 2,0 mm liegt.

9. Luftreifen nach einem der vorhergehenden Ansprüche, wobei Stufen zwischen Blockabschnitten, die auf beiden Seiten der gleichen Reifenbreitenrichtungsrille (26) angeordnet sind, in der Reifenbreitenrichtung W durch den Höhenunterschied zwischen den Vorsprungsabschnitten (34A) und den ausgesparten Abschnitten (36A) auf der Laufflächeninnenseite der Reifenbreitenrichtungsrille (26) und den Vorsprungsabschnitten (30B) und den ausgesparten Abschnitten (32B) auf der Anfangsseite der Reifenbreitenrichtungsrille gebildet werden.

10. Luftreifen nach einem der vorhergehenden Ansprüche, wobei, in den Blockabschnitten (28), die einander um die Reifenumfangsrichtung benachbart sind, Blockabschnitte, die eine höhere Gesamtblockhöhe haben, und Blockabschnitte, die eine niedrigere Gesamtblockhöhe haben, abwechselnd zueinander angeordnet sind.

## Revendications

1. Pneumatique (10), comprenant :
une section de zone de contact qui est formée au niveau d'une bande de roulement (12) et qui est partitionnée par une rainure de direction circonférentielle de pneumatique (20) ;
une pluralité de rainures de direction de largeur de pneumatique (26) qui divisent la section de zone de contact et qui s'étendent suivant une direction de largeur de pneumatique W ;
une pluralité de sections de bloc (28) qui sont formées par partitionnement par les rainures de direction de largeur de pneumatique (26) ; et
une section de protubérance (30A) qui fait saillie depuis chaque section de bloc (28B) sur un côté, une section évidée (32B) qui fait face, dans la direction circonférentielle de pneumatique, à la section de protubérance (30A) et qui forme un évidement dans chaque section de bloc (28B) sur un autre côté, une section évidée (32A) qui est évidée à l'intérieur de la section de bloc (28B) sur le premier côté considéré et une section de protubérance (30B) qui fait face, dans la direction circonférentielle de pneumatique, à la section évidée (32A) et qui fait saillie depuis la section de bloc (28B) sur l'autre côté par rapport à une direction d'extension des rainures de direction de largeur de pneumatique (26) selon une vue en plan, de telle sorte que les sections de protubérance (30A, 30B) et les sections évidées (32A, 32B) configurent une section de chacune des sections de bloc (28) et qu'elles soient respectivement formées au niveau des sections de bloc (28) sur le premier côté et sur l'autre côté au travers des rainures de direction de largeur de pneumatique (26) ; dans lequel :
une hauteur de bloc des sections de protubérance (30A, 30B) est formée de telle sorte qu'elle soit plus élevée qu'une hauteur de bloc de sections évidées (40, 36A) qui sont positionnées au travers des rainures de direction de largeur de pneumatique (26) ; **caractérisé en ce que** :
les sections de protubérance (30B) d'une section de bloc (28B) au niveau d'un côté d'attaque des rainures de direction de largeur de pneumatique (26) présentent une hauteur de bloc plus élevée que des sections de protubérance (34A) d'une section de bloc adjacente circonférentiellement (28C) au niveau d'un côté d'entrée dans la bande de roulement.

2. Pneumatique selon la revendication 1, dans lequel chaque section de bloc (28B) comporte un côté d'extrémité d'attaque et un côté d'extrémité d'entrée dans la bande de roulement.

3. Pneumatique selon la revendication 2, dans lequel les sections de protubérance (30B, 34B) au niveau du côté d'extrémité d'entrée dans la bande de roulement de la section de bloc présentent une hauteur de bloc plus élevée que les sections de protubérance au niveau du côté d'extrémité d'attaque de la section de bloc.

4. Pneumatique (10) selon l'une quelconque des revendications qui précèdent, dans lequel les rainures de direction de largeur de pneumatique (26) sont en forme de zigzag et présentent une amplitude dans la direction circonférentielle de pneumatique.

5. Pneumatique (10) selon l'une quelconque des revendications qui précèdent, dans lequel les rainures de direction de largeur de pneumatique (26) sont des lamelles qui se ferment pendant un contact avec le sol.

6. Pneumatique selon l'une quelconque des revendications 2 à 5, dans lequel une différence de hauteur G1 entre un point de crête (30BP, 34BP) de la section de protubérance et un point de creux (32BP, 36BP) de la section évidée au niveau du côté d'extrémité d'attaque de la section de bloc est compris dans une plage de 0,1 mm à 1,0 mm.

7. Pneumatique selon l'une quelconque des revendications 2 à 6, dans lequel une différence de hauteur G2 entre un point de crête (30AP, 34AP) de la section de protubérance et un point de creux (32AP, 36AP) de la section évidée au niveau du côté d'extrémité d'entrée dans la bande de roulement de la section de bloc est compris dans une plage de 0,1 mm à 1,0 mm.

8. Pneumatique selon l'une quelconque des revendications 2 à 7, dans lequel une différence de hauteur G3 entre un point de crête (30BP, 34BP) de la section de protubérance au niveau du côté d'extrémité d'attaque de la section de bloc et un point de creux (32AP, 36AP) de la section évidée au niveau du côté d'extrémité d'entrée dans la bande de roulement de la section de bloc est compris dans une plage de 0,2 mm à 2,0 mm.

9. Pneumatique selon l'une quelconque des revendications qui précèdent, dans lequel des marches entre des sections de bloc qui sont disposées sur l'un et l'autre côtés de la même rainure de direction de largeur de pneumatique (26) sont formées dans la direction de largeur de pneumatique W par la différence en termes de hauteur entre les sections de protubérance (34A) et les sections évidées (36A) sur le côté d'entrée dans la bande de roulement de la rainure de direction de largeur de pneumatique (26) et les sections de protubérance (30B) et les sections évidées (32B) sur le côté d'attaque de la rainure de direction de largeur de pneumatique.

10. Pneumatique selon l'une quelconque des revendications qui précèdent, dans lequel, dans les sections de bloc (28) qui sont adjacentes les unes aux autres sur le pourtour suivant la direction circonférentielle de pneumatique, des sections de bloc qui présentent une hauteur de bloc globale plus élevée et des sections de bloc qui présentent une hauteur de bloc globale plus faible sont disposées en alternance les unes par rapport aux autres.
